(19) Europäisches Patentamt
European Patent Office
Office européen des brevets

(11) **EP 3 081 689 A1**

(12) **EUROPÄISCHE PATENTANMELDUNG**

(43) Veröffentlichungstag:
19.10.2016  Patentblatt 2016/42

(51) Int Cl.:
*D06N 7/00* [(2006.01)]    *B60N 3/04* [(2006.01)]

(21) Anmeldenummer: **15290100.5**

(22) Anmeldetag: **13.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **ARLANXEO Deutschland GmbH**
**41540 Dormagen (DE)**

(72) Erfinder: **Die Erfindernennung liegt noch nicht vor**

(74) Vertreter: **Wichmann, Birgid et al**
**LANXESS Deutschland GmbH**
**LEX-IPR**
**Kennedyplatz 1**
**50569 Köln (DE)**

(54) **TEXTILE BODENBELÄGE MIT NIEDRIGEN EMISSIONSWERTEN**

(57)  Die vorliegende Erfindung betrifft textile Bodenbeläge mit einer rückseitigen Trägerschicht enthaltend ein Vulkanisat basierend auf mindestens einem speziellen Nitrilkautschuk (1) und einer vorderseitige Textilschicht. Diese textilen Bodenbeläge zeichnen sich durch niedrige Emissionswerte aus und sind besonders geeignet zur Verwendung in Innehräumen.

EP 3 081 689 A1

Printed by Jouve, 75001 PARIS (FR)

**Beschreibung**

Die vorliegende Erfindung betrifft textile Bodenbeläge auf Basis von Nitrilkautschuken mit niedrigen Emissionswerten, deren Herstellung sowie deren Verwendung in Innenräumen.

Textile Bodenbeläge, die in Innenräumen wie beispielsweise Kraftfahrzeugen, Flugzeugen, Wohnungen, Geschäften oder deren Eingangsbereichen zu finden sind, besitzen üblicherweise einen Mehrschichtaufbau unter Kombination eines Elastomers und eines textilen Belags. Typischerweise ist das textile Material mit einer Trägerschicht verbunden, die mindestens ein Elastomer aufweist. Zwischen textilem Material und Trägerschicht können weitere, als Klebstoff- oder Verbindungsschicht dienende Schichten angeordnet sein. Grundsätzlich können zur Herstellung derartiger textiler Bodenbeläge verschiedene Kautschuke eingesetzt werden, wie z.B. Nitrilkautschuke, Styrol-Butadien-Kautschuke oder EPDM.

Textile Bodenbeläge sind beispielsweise in Form sogenannter Fuß- und Logomatten bekannt, wobei der textile Bodenbelag nicht nur bedruckt, sondern auch mit Ziergegenständen wie Schmucksteinen versehen werden kann. Eine Methode, den Ziergegenstand mit dem Bodenbelag zu verbinden, besteht in der Einbringung und Verklebung mit der Textilschicht. Die textile Schicht der Oberfläche wird üblicherweise als Flor oder Pol bezeichnet, welcher aus Polfäden besteht. Die Flor- bzw. Polschicht umfasst die Gesamtmenge des Fasermaterials.

Solche textilen Bodenbeläge finden sich in öffentlichen Bereichen und Innenräumen, für die in den letzten Jahren verstärkt neue Normen und Regularien zur Reduzierung von Emissionen aufgestellt worden sind. Die Reduzierung und Begrenzung von Emissionen aus Bodenbelägen und Kautschuken stellt somit eine besondere Anforderung dar.

Die **Indoor airPLUS Liste** der US Environmental Protection Agency empfiehlt insbesondere für Innenraumanwendungen den Gebrauch von Materialien mit niedrigen Emissionen, angefangen von Farben bis hin zu Bodenbelägen.

**ISO 12219-1:2012** betrifft die Innenraumluft von Straßenfahrzeugen und beschreibt die Bestimmung der sogenannten VOCs (volatile organic compounds) im Innenraum von der Straßenfahrzeuge. Drei verschiedene Tests werden zur VOC Bestimmung beschrieben, wobei sich zwei Tests auf die Bestimmung der VOCs im Autoinnenraum beziehen und ein Test auf die Bestimmung von Formaldehyd. Eine Minimierung von VOCs in Passagierabteilen in allen Arten von Automobilen ist erstrebenswert. Auch die Emission aus Kautschukmatten im Innenraum wird gemäß diesen Methoden gemessen.

Insbesondere die Vergabegrundlage für Umweltzeichen "Elastische Fußbodenbeläge **RAL-UZ 120"** der Ral gGmbH beschreibt die Anforderungen und Spezifikationen für Bodenplatten, die mit dem **"Blauen Engel"** ausgezeichnet werden sollen. Diese Grundlage für die Vergabe des Umweltzeichens wurde von der Jury Umweltzeichen in Zusammenarbeit mit dem Bundesminister für Umwelt, Naturschutz und Reaktorsicherheit, dem Umweltbundesamt und unter Einbeziehung der Ergebnisse der von der RAL gGmbH einberufenen Anhörungsbesprechungen beschlossen. Mit der Vergabe des Umweltzeichens wurde die RAL gGmbH beauftragt. Bodenbeläge werden teilweise großflächig wie in Innenräumen verlegt, weshalb aus Umwelt- und Gesundheitsgesichtspunkten möglichst geringe Emissionen aus diesen Produkten für den Nutzer vorteilhaft sind. Das Umweltzeichen "Blauer Engel" bietet sich dabei für die Kennzeichnung emissionsarmer Produkte an. Im Speziellen gilt diese Vergabegrundlage unter anderem für Kunststoffbeläge und Beläge aus natürlichem und synthetischem Kautschuk. Die Produkte dürfen gemäß RAL-UZ 120 in Anlehnung an die vom Ausschuss zur gesundheitlichen Bewertung von Bauprodukten (AgBB) erarbeitete "Vorgehensweise bei der gesundheitlichen Bewertung der Emissionen von flüchtigen bzw. semiflüchtigen organischen Verbindungen (VOC und SVOC) aus Bauprodukten" bestimmte Emissionswerte nicht überschreiten. Die Anforderungen verfolgen das Ziel, in einem durchschnittlich großen Wohnraum bei einem Luftwechsel von 0,5/h den Beitrag von Bodenbelägen zum Gehalt flüchtiger organischer Verbindungen in der Innenraumluft nach 28 Tagen auf 300 $\mu$g/m$^3$ zu begrenzen. Die Summe aller VOC Emissionen ist hierbei auf $\leq$ 100$\mu$g/m$^3$ beschränkt.

Auch der Öko-Tex$^®$ Standard 100 zielt darauf ab, dass Textilien bestimmte Grenzwerte für Emissionen einhalten und bei Erfüllung der Vorgaben mit dem Öko-Tex$^®$ Label versehen werden können (https://www.oeko-tex.com/de/manufacturers/ product classes/product classes.html). Zu den überprüften Textilmaterialien zählen mit der Produktklasse IV auch Ausstattungsmaterialien für Dekorationszwecke wie Tischwäsche und Vorhänge, aber auch textile Wand- und Bodenbeläge.

DE 69231347 T2 beschreibt speziell aufgebaute mehrschichtige Bodenmatten, die beispielweise in Passagierabteilen von Kraftfahrzeugen oder Eingängen von Wohnungen oder Arbeitstätten eingesetzt werden und die bisherigen Probleme derartiger Matten, insbesondere die Ablösung der verschiedenen Schichten voneinander, das Ausfransen am Rand und ein Verrutschen auf dem Untergrund etc. lösen sollen. Derartige textile Bodenmatten werden herkömmlicherweise aus einer Kombination eines Elastomers und eines Teppichmaterials hergestellt und das Teppichmaterial wird mittels verschiedener Verfahren mit der Gummiträgerschicht verbunden. DE 69231347 T2 nennt für die Herstellung der speziellen Bodenmatten unterschiedliche Kautschuke, z.B. CR, NR, SBR, NBR oder deren Kombinationen. Dem Thema niedriger Emissionen wird jedoch in DE 69231347 T2 keinerlei Beachtung geschenkt, und es wird kein Hinweis gegeben, dass emissionsarme Kautschuke verwendet werden könnten oder sollten.

EP 2 537 977 A1 beschreibt ein Verfahren zur Herstellung eines textilen Bodenbelags, wie Fuß- und Logomatten, umfassend eine rückseitige Trägerschicht, eine vorderseitige Textilschicht, wobei die Textilschicht ein Grundmaterial und vorzugsweise getuftete Polfäden umfasst, und wenigstens einen Ziergegenstand, der an seiner Rückseite mit einer Klebstoffschicht am textilen Bodenbelag befestigt wird. Solche textile Bodenbeläge werden in stark beanspruchten Bereichen, wie z.B. Eingangsbereichen oder Geschäftslokalen eingesetzt. Bevorzugt ist es gemäß EP 2 537 977 A1, dass die rückseitige Trägerschicht aus einem Elastomer, vorzugsweise Kautschuk, besonders bevorzugt vulkanisiertem Kautschuk, besteht, da Kautschukvulkanisate temperaturstabil und mechanisch stabil sind. Verschiedenste Kautschukarten, wie NBR, EPDM und SBR werden zur Fertigstellung der Matten beschrieben, jedoch wird keine Information über die Herstellung von emissionsarmen Matten bzw. Bodenbelägen oder die Verwendung von besonders emissionsarmen Kautschuken gegeben.

Wie aus den vorgenannten Literaturstellen erkennbar ist, umfasst die Trägerschicht von textilen Bodenbelägen, ob in Bahnen- oder Plattenform, typischerweise mindestens ein Elastomer, da diverse Thermoplasten, wie z.B. PVC, alleine nicht ausreichend stabil sind, dass der textile Bodenbelag mehrfaches Reinigen in Großreinigungsanlagen übersteht. Textile Bodenbeläge auf Basis von vulkanisiertem Kautschuk sind ausreichend temperaturstabil und genügen auch den Anforderungen an die mechanische Stabilität. Grundsätzlich sind jegliche Kautschuksorten denkbar, wie NBR, EPDM, SBR.

Unter Nitrilkautschuken, abgekürzt nachfolgend auch als "NBR" bezeichnet, werden Kautschuke verstanden, bei denen es sich um Co- oder Terpolymere aus mindestens einem Monomer in Form eines $\alpha,\beta$-ungesättigten Nitrils, mindestens einem konjugierten Dien und gegebenenfalls einem oder mehreren weiteren copolymerisierbaren Monomeren handelt. Derartige Nitrilkautschuke und Verfahren zur Herstellung solcher Nitrilkautschuke sind bekannt, siehe z.B. Ullmann's Encyclopedia of Industrial Chemistry, VCH Verlagsgesellschaft, Weinheim, 1993, S. 255-261.

NBR wird typischerweise durch Emulsionspolymerisation hergestellt, wobei zunächst ein NBR-Latex erhalten wird. Der NBR-Feststoff wird aus diesem Latex durch Koagulation isoliert, meist unter Einsatz von Salzen oder Säuren. Die Emulsionspolymerisation wird dabei üblicherweise unter Einsatz von Molekulargewichtsreglern durchgeführt. Häufig eingesetzte Molekulargewichtsregler basieren auf Mercaptanen. Zur Molekulargewichtsregelung von Emulsionskautschuken auf der Basis von Monomeren wie Styrol, Butadien, Acrylnitril, (Meth)acrylsäure, Fumarsäure, Ethylacrylat, Butylacrylat, 2-Ethylhexylacrylat, Chloropren und anderen ist insbesondere die Verwendung von Dodecylmercaptanen von Bedeutung.

In Ullmanns Enzyklopädie der technischen Chemie, 4. Auflage, Band 13, 611-612 wird beschrieben, dass das Molekulargewicht von NBR durch den Einsatz von Alkyl-mercaptanen, Di- und Polysulfiden oder Xanthogendisulfiden geregelt werden kann. Tert-Dodecyl-mercaptan sowie Diisopropylxanthogendisulfide werden als hauptsächlich eingesetzte Regler genannt.

US-A-2,434,536 offenbart, dass synthetische Kautschuke auf Basis von Diolefinen wie z.B. Butadien und gegebenenfalls weiteren copolymerisierbaren Monomeren wie z.B. Styrol, $\alpha$-Methylstyrol, Vinylnaphthalin, Acrylnitril, Me-thacrylnitril, Methylmethacrylat, Ethylfumarat oder Methylvinylketon durch Emulsionspolymerisation in Gegenwart von aliphatischen Mercaptanen mit mindestens 7 und bevorzugt 10 oder mehr C-Atomen als Molekulargewichtsreglern hergestellt werden. Bevorzugt werden aliphatische Mercaptane mit einem mittleren Molekulargewicht von 188 bis 230 g/mol eingesetzt, welche mindestens 50% Dodecylmercaptan und den restlichen Anteil zu 100% in Form von Mercaptanen mit 10 bis 16 C-Atomen aufweisen.

In EP-A-0 692 496, EP-A-0 779 301 und EP-A-0 779 300 werden jeweils Nitrilkautschuke beschrieben, denen gemeinsam ist, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist. Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird. Maßnahmen, durch die eine Beeinflussung der VOC Werte des Nitrilkautschuks sowie des Eigenschaftsprofils des vulkanisierten NBR, und des weiteren die Herstellung und Verwendung von textilen Bodenmatten und textilen Bodenbelägen möglich ist, können der Lehre dieses Patents nicht entnommen werden.

Auch in der industriellen Praxis werden häufig tertiäre Docdecylmercaptane eingesetzt (auch als "TDM" oder "TDDM" abgekürzt). Bekannt ist beispielsweise das von Chevron Philipps käuflich erhältliche TDM, welches in der Regel aus einer großen Mischung verschiedenster Isomere besteht. Eigene Untersuchungen ergaben, dass Nitrilkautschuke, die unter Einsatz tertiärer Dodecylmercaptane hergestellt werden, in VOC Tests (durchgeführt mittels TDS-GC/MS Untersuchungen nach VDA 278 Empfehlung) einen hohen Anteil an Schwefelverbindungen und ferner nicht-Schwefel haltige Verunreinigungen des TDMs aufweisen, die in einigen praktischen Anwendungen zu wahrnehmbaren, unangenehmen Geruchsbelästigungen führen können. Dies führt insbesondere bei der Herstellung und Verwendung von textilen Bodenmatten und textilen Bodenbeläge zu unangenehmen Folgen.

Während es über den Einfluss der unterschiedlichen zur Latexkoagulation einsetzbaren Salze auf die Eigenschaften des erhaltenen NBRs umfangreiche Literatur gibt, finden sich keinerlei Hinweise oder Untersuchungen zum Einfluss der Molekulargewichtsregler auf die VOC Werte von Nitrilkautschuken. Für spezielle Anwendungen wie z.B. bei Bodenbelägen auf Basis von Nitrilkautschuken kommt jedoch den VOC Werten erhebliche Bedeutung zu.

In einer noch nicht veröffentlichten europäischen Patentanmeldung wird die Bereitstellung von Nitrilkautschuken mit einem sehr guten Vulkanisationsverhalten und einem gleichzeitig verbesserten Emissionsverhalten beschrieben, wobei die korrespondierenden Vulkanisate über exzellente Eigenschaften verfügen. Charakterisiert werden diese Nitrilkautschuke mit Wiederholungseinheiten mindestens eines α,β-ungesättigten Nitril-Monomeren und mindestens eines konjugierten Dien-Monomeren durch einen **Emissionsquotienten E** gemäß der Formel (I) von kleiner öder gleich 0,25 mg/(kg*Mooney Einheiten),

$$E = \frac{[\text{flüchtige Bestandteile}]}{[\text{Mooney Viskosität}]} \times \frac{[\text{Nitrilgehalt}]}{100} \qquad (I)$$

worin

| | |
|---|---|
| [flüchtige Bestandteile] | die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden, |
| [Mooney-Viskosität] | die nach ASTM D 1646 bestimmte Mooney-Viskosität ML 1+4 bei 100°C des Nitrilkautschuks angegeben in Mooney-Einheiten darstellt, und |
| [Nitrilgehalt] | den dimensionslos angegebenen Gehalt des α,β-ungesättigten Nitrils im Nitrilkautschuk darstellt, der in Gew.% gemäß DIN 53 625 nach Kjeldahl bestimmt wird. |

Erhältlich sind diese Nitrilkautschuke überraschenderweise, wenn die Emulsionspolymerisation unter Wahl spezieller Molekulargewichtsregler durchgeführt und gleichzeitig die Polymerisation bis zu einem Umsatz von 60% oder höher geführt wird. Beschrieben werden ferner vulkanisierbare Mischungen auf Basis des emissionsarmen Nitrilkautschuks und deren generelle Eignung für Riemen, Walzenbeläge, Dichtungen, Kappen, Stopfen, Schläuche, Bodenbeläge, Dichtungsmatten oder -platten, Profile oder Membranen. Der Einsatz für textile Bodenbeläge wird nicht beschrieben, und es wird keinerlei Hinweis gegeben, wie Rezepturen für diesen Einsatzzweck auszusehen haben.

Die **Aufgabe der vorliegenden Erfindung** bestand somit darin, einen textilen Bodenbelag basierend auf Nitrilkautschuk-Vulkanisaten bereitzustellen, der das Anforderungsprofil eines deutlich verringerten VOC Gehalts erfüllt und somit insbesondere für den Einsatz in Innenräumen wie z.B. Kraftfahrzeugen, Flugzeugen, Wohnungen, öffentlichen Gebäuden u.a. geeignet sind.

**Gelöst wird diese Aufgabe** durch einen textilen Bodenbelag enthaltend

(a) eine rückseitige Trägerschicht enthaltend ein Vulkanisat basierend auf mindestens einem Nitrilkautschuk (1) und
(b) eine vorderseitige Textilschicht,
dadurch gekennzeichnet, dass der Nitrilkautschuk (1) Wiederholungseinheiten mindestens eines α,β-ungesättigten Nitril-Monomeren und mindestens eines konjugierten Dien-Monomeren aufweist und einen **Emissionsquotienten E** gemäß der Formel (I) von kleiner oder gleich 0,25 mg/(kg*Mooney Einheiten) besitzt,

$$E = \frac{[\text{flüchtige Bestandteile}]}{[\text{Mooney Viskosität}]} \times \frac{[\text{Nitrilgehalt}]}{100} \qquad (I)$$

worin

| | |
|---|---|
| [flüchtige Bestandteile] | die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden, |
| [Mooney-Viskosität] | die nach ASTM D 1646 bestimmte Mooney-Viskosität ML 1+4 bei 100°C des Nitrilkautschuks angegeben in Mooney-Einheiten darstellt, und |
| [Nitrilgehalt] | den dimensionslos angegebenen Gehalt des α,β-ungesättigten Nitrils im Nitrilkautschuk darstellt, der in Gew.% gemäß DIN 53 625 nach Kjeldahl bestimmt wird. |

Vorteilhafterweise verfügen die erfindungsgemäßen Bodenbeläge unter Verwendung von Vulkanisaten der vorstehend definierten speziellen Nitrilkautschuke als Trägerschicht über ein sehr gutes Emissionsverhalten und sind daher exzellent für den Einsatz in Innenräumen wie beispielsweise Passagierabteilungen von Kraftfahrzeugen, Flugzeugen, Wohnungen oder Geschäften bzw. deren Eingängen geeignet.

**Gegenstand der vorliegenden Erfindung** ist ferner die Herstellung der textilen Bodenbeläge und die Verwendung der textilen Bodenbeläge in Innenräumen, vorzugsweise in Passagierabteilungen von Kraftfahrzeugen, Flugzeugen, Wohnungen, Geschäften oder deren Eingängen.

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

### Nitrilkautschuk:

Der in den erfindungsgemäßen Bodenbelägen einzusetzende Nitrilkautschuk besitzt einen Emissionsquotienten E gemäß der allgemeinen Formel (I) von kleiner oder gleich 0,25 mg/(kg*Mooney Einheiten), bevorzugt kleiner oder gleich 0,22 mg/(kg*Mooney Einheiten) und besonders bevorzugt kleiner oder gleich 0,20 mg/(kg*Mooney Einheiten).

Bei den flüchtigen Bestandteilen, deren Konzentration durch die TDS-GC/MS Untersuchung nach VDA 278 Empfehlung (Version 09.2002) zwischen 28,4 min und 34,0 min bestimmt werden zwecks Berechnung des Emissionskoeffzienten, handelt es sich typischerweise um flüchtige Bestandteile des eingesetzten Molekulargewichtsreglers.

Die Bestimmung der Mooney Viskosität des Nitrilkautschuks (ML 1+4 bei 100°C) gemäß nach ASTM D 1646 erfolgt typischerweise unter Einsatz von nicht kalandrierten erfindungsgemäßen Nitrilkautschuken.

Die erfindungsgemäß einzusetzenden Nitrilkautschuke weisen Wiederholungseinheiten mindestens eines $\alpha,\beta$-ungesättigten Nitrils und mindestens eines konjugierten Diens auf. Optional können sie ferner Wiederholungseinheiten von einem oder mehreren weiteren copolymerisierbaren Monomeren enthalten Wesentlich ist, dass der Emissionsquotienten E gemäß der allgemeinen Formel (I) von kleiner oder gleich 0.25 mg/(kg Mu) erfüllt ist.

Die Wiederholungseinheiten im Nitrilkautschuk, die auf dem mindestens einen **konjugierten Dien** basieren, gehen bevorzugt auf $(C_4-C_6)$ konjugierte Diene zurück. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als $\alpha,\beta$-**ungesättigtes Nitril** kann jedes bekannte $\alpha,\beta$-ungesättigte Nitril zur Herstellung der erfindungsgemäßen Nitrilkautschuke eingesetzt werden, bevorzugt sind $(C_3-C_5)$-$\alpha,\beta$-ungesättigte Nitrile wie Acrylnitril, Methacrylnitril, Ethacrylnitril oder Mischungen davon. Besonders bevorzugt ist Acrylnitril.

In einer bevorzugten Ausführungsform basiert das Vulkanisat der rückseitigen Trägerschicht (a) des erfindungsgemäßen Bodenbelags auf einem Nitrilkautschuk enthaltend Wiederholungseinheiten von Acrylnitril und Butadien, besonders bevorzugt mit Wiederholungseinheiten von ausschließlich Acrylnitril und Butadien.

Als weitere copolymerisierbare Monomere können beispielsweise **aromatische Vinylmonomere,** bevorzugt Styrol, $\alpha$-Methylstyrol und Vinylpyridin, eingesetzt werden sowie **nicht-konjugierte Diene**, wie 4-Cyanocyclohexen und 4-Vinylcyclohexen, oder auch **Alkine,** wie 1 - oder 2-Butin.

Weiterhin können als copolymerisierbare Termonomere Epoxygruppenhaltige Monomere eingesetzt werden, vorzugsweise Glycidylacrylat und Glycidylmethacrylat.

Alternativ können als weitere copolymerisierbare Monomere **carboxygruppenhaltige, copolymerisierbare Termonomere** eingesetzt werden, beispielsweise $\alpha,\beta$-ungesättigte Monocarbonsäuren, deren Ester, $\alpha,\beta$-ungesättigte Dicarbonsäuren, deren Mono- oder -Diester oder deren entsprechenden Anhydride oder Amide.

Als $\alpha,\beta$-**ungesättigte Monocarbonsäuren** können bevorzugt Acrylsäure und Methacrylsäure eingesetzt werden.

Einsetzbar sind auch **Ester der $\alpha,\beta$-ungesättigten Monocarbonsäuren,** bevorzugt deren Alkylester und Alkoxyalkylester. Bevorzugt sind die Alkylester, insbesondere $C_1-C_{18}$ Alkylester der $\alpha,\beta$-ungesättigten Monocarbonsäuren, Besonders bevorzugt sind Alkylester, insbesondere $C_1-C_{18}$ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der $\alpha,\beta$-ungesättigten Monocarbonsäuren, besonders bevorzugt Alkoxyalkylester der Acrylsäure oder der Methacrylsäure, insbesondere $C_2-C_{12}$-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einsetzbar sind auch Aminogruppenhaltige $\alpha,\beta$-ungesättigte Carbonsäureester wie Dimethylaminomethylacrylat und Diethylaminoethylacrylat.

Als weitere copolymerisierbare Monomere können ferner $\alpha,\beta$-**ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner $\alpha,\beta$-**ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von $\alpha,\beta$-ungesättigten Dicarbonsäuren.**

Bei diesen $\alpha,\beta$-**ungesättigten Dicarbonsäuremono- oder diestern** kann es sich z.B. um **Alkyl-,** bevorzugt $C_1$-$C_{10}$-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt $C_2$-$C_{12}$ Alkoxyalkyl-, besonders bevorzugt $C_3$-$C_8$-Alkoxyalkyl, **Hydroxyalkyl,** bevorzugt $C_1$-$C_{12}$ Hydroxyalkyl-, besonders bevorzugt $C_2$-$C_8$-Hydroxyalkyl, **Cycloalkyl-,** bevorzugt $C_5$-$C_{12}$-Cycloalkyl-, besonders bevorzugt $C_6$-$C_{12}$-Cycloalkyl, **Alkylcycloalkyl-,** bevorzugt $C_6$-$C_{12}$-Alkylcycloalkyl-, besonders bevorzugt $C_7$-$C_{10}$-Alkylcycloalkyl, Aryl-, bevorzugt $C_6$-$C_{14}$-Aryl-Mono- oder -Diester, handeln, wobei es sich im Fall der Diester jeweils auch um gemischte Ester handeln kann.

Besonders bevorzugte **Alkylester von $\alpha,\beta$-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der $\alpha,\beta$-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der $\alpha,\beta$-ungesättigten Monocarbonsäuren werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Als $\alpha,\beta$-**ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder-methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und $\alpha,\beta$-ungesättigtem Nitril in den einzusetzenden Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.-%, besonders bevorzugt im Bereich von 50 bis 85 Gew.%, bezogen auf das Gesamtpolymer. Der Anteil des oder der Summe der $\alpha,\beta$-ungesättigten Nitrile liegt üblicherweise bei 5 bis 80 Gew.%, bevorzugt bei 10 bis 55 Gew.-%, besonders bevorzugt bei 15 bis 50 Gew.-%, bezogen auf das Gesamtpolymer. Die Anteile der Wiederholungseinheiten an konjugiertem Dien und $\alpha,\beta$-ungesättigtem Nitril in den erfindungsgemäßen Nitrilkautschuken summieren sich jeweils zu 100 Gew.-% auf.

Die zusätzlichen Monomere können in Mengen von 0 bis 40 Gew.%, bevorzugt 0 bis 30 Gew.-%, besonders bevorzugt 0 bis 26 Gew.-%, bezogen auf das Gesamtpolymer, vorliegen. In diesem Fall werden entsprechende Anteile der Wiederholungseinheiten des oder der konjugierten Diene und/oder der Wiederholungseinheiten des oder der $\alpha,\beta$-ungesättigten Nitrile durch die Anteile dieser zusätzlichen Monomere ersetzt, wobei sich die Anteile aller Wiederholungseinheiten der Monomere weiterhin jeweils zu 100 Gew.-% aufsummieren.

Die Bestimmung des Nitrilgehalts erfolgt über den Stickstoffgehalt, der in den Nitrilkautschuken gemäß DIN 53 625 nach Kjeldahl bestimmt wird.

Die Nitrilkautschuke weisen Mooney-Viskositäten ML 1+4 @100°C von 10 bis 150 Mooney Einheiten (MU), vorzugsweise von 20 bis 100 MU auf. Die Mooney-Viskosität ML 1+4@100°C wird mittels eines Scherscheibenviskosimeters nach DIN 53523/3 bzw. ASTM D 1646 bei 100°C bestimmt. Typischerweise erfolgt diese Messung unter Einsatz von nicht kalandrierten Nitrilkautschuk Proben.

Die Glastemperaturen der Nitrilkautschuke liegen im Bereich -70°C bis +10°C, vorzugsweise im Bereich -60°C bis 0°C.

Bevorzugt sind erfindungsgemäße Nitrilkautschuke, die Wiederholungseinheiten von Acrylnitril, und 1,3-Butadien enthalten. Alternativ können Nitrilkautschuke eingesetzt werden, die Wiederholungseinheiten von Acrylnitril, 1,3-Butadien und einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren $\alpha,\beta$-ungesättigten Mono- oder Dicarbonsäure, deren Estern oder Amiden aufweisen, und insbesondere Wiederholungseinheiten eines Alkylesters einer $\alpha,\beta$-ungesättigten Carbonsäure, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

**Verfahren zur Herstellung der Nitrilkautschuke:**

Die Herstellung der in Form ihrer Vulkanisate einzusetzenden Nitrilkautschuke erfolgt durch Emulsionspolymerisation.

**Molekulargewichtsregler:**

Es ist wesentlich, dass das Verfahren zur Herstellung der Nitrilkautschuke in Anwesenheit von tert.-Nonylmercaptan als Molekulargewichtsregler durchgeführt wird. Hierbei kann es sich beispielsweise

a) um tert.-Nonylmercaptan mit einer Reinheit von mindestens 95 Gew.%, bevorzugt mindestens 97 Gew.% handeln, oder

b) um ein Gemisch, das mindestens 50 Gew.% aber weniger als 95 Gew.% tert.-Nonylmercaptan enthält sowie ein oder mehrere weitere isomere Nonylmercaptane und/oder ein oder mehrere weitere $C_{10}$-$C_{16}$ Alkylthiole enthält.

Das tert.-Nonylmercaptan a) ist käuflich erhältlich, z.B. von Sigma Aldrich (CAS Nr. 25360-10-5) mit einer Reinheit von mindestens 97 Gew.% oder von Chevron Phillips als Produkt Sulfol® 90 mit einer Reinheit von mindestens 97 Gew.% oder von diversen Chemikalienherstellern. Gemische b), die mindestens 50 Gew.% aber weniger als 95 Gew.% tert.-Nonylmercaptan enthalten sowie ein oder mehrere weitere isomere Nonylmercaptane und/oder ein oder mehrere weitere $C_{12}$-$C_{16}$ Alkylthiole, sind ebenfalls käuflich erhältlich, z.B. als Mercaptane 175 von Atofina mit einem Gehalt an tert.-Nonylmercaptan von 65 Gew.% und Dodecylmercaptanen von 35 Gew.% oder Sulfol® 100 von Chevron Phillips.

Der eingesetzte Molekulargewichtsregler wird bei der Polymerisation üblicherweise in einer Menge von 0,05 bis 3 Gew.-Teilen, vorzugsweise von 0,1 bis 1,5 Gew.-Teilen bezogen auf 100 Gew.-Teile der Monomermischung verwendet. Geeignete Mengen kann der Fachmann in einfachen Handversuchen ermitteln.

Die Dosierung des Molekulargewichtsreglers bzw. des Molekulargewichtsreglergemischs erfolgt entweder ausschließlich zu Beginn der Polymerisation oder zu Beginn und zusätzlich portionsweise im Verlauf der Polymerisation. Bei Batch-Verfahren wird die gesamte Menge des Molekulargewichtsreglers bzw. des Molekulargewichtsreglergemischs typischerweise am Anfang zugegeben, bei kontinuierlicher Durchführung hat sich eine inkrementelle Zugabe bewährt. Üblicherweise wird der Molekulargewichtsregler bzw. das Reglergemisch dann in mindestens zwei Stufen zugegeben, wobei die Zugabe in zwei, drei oder auch mehr Stufen möglich ist. Selbst eine kontinuierliche Zugabe über die gesamte Polymerisationszeit ist möglich. Besonders bevorzugt wird der Molekulargewichtsregler bzw. das Molekulargewichtsreglergemisch in zwei Stufen zugegeben. Bei einer Zweistufendosierung hat es sich bewährt, den Regler/das Reglergemisch zunächst in einer Menge von 5 bis 65 Gew%, bevorzugt 10 bis 60 Gew.%, bezogen auf die Gesamtmenge an Regler/Reglergemisch, vor Beginn der Polymerisation zuzugeben und die restliche Menge an Regler/Reglergemisch in einer nachfolgenden Dosierung bei einem Umsatz von 5 bis 80%, bevorzugt 10 bis 55%, bezogen auf die insgesamt eingesetzte Menge an Monomeren. Bei einer Dreifach- und Mehrfach-Dosierung empfiehlt es sich, durch geeignete Vorversuche die günstigste Menge an Molekulargewichtsregler und den günstigsten Zeitpunkt der Zugabe duzu ermitteln.

Der Molekulargewichtsregler findet sich aufgrund seiner Funktion in einem gewissen Maß in Form von Endgruppen im Nitrilkautschuk wieder, d.h. der Nitrilkautschuk enthält $C_9$-Alkylthio-Endgruppen. In einer Ausführungsform enthält der erfindungsgemäße textile Bodenbelag in der rückseitigen Trägerschicht somit ein Vulkanisat basierend auf mindestens einem Nitrilkautschuk (1), enthaltend $C_9$-Alkylthio-Endgruppen und mit einem **Emissionsquotienten E** gemäß der Formel (I) von kleiner oder gleich 0,25 mg/(kg*Mooney Einheiten), bevorzugt kleiner oder gleich 0,22 mg/(kg*Mooney Einheiten) und besonders bevorzugt kleiner oder gleich 0,20 mg/(kg*Mooney Einheiten). In einer speziellen Variante dieser Ausführungsform basiert das Vulkanisat auf mindestens einem Nitrilkautschuk mit Wiederholungseinheiten ausschließlich von Acrylnitril und Butadien.

**Emulgatoren:**

Als **Emulgatoren** können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium- Natrium, Kalium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methylenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligomerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsuflonatgemische mit 12 bis 18 C-Atomen, Na-Alkylarylsulfonate, Na-Diisobutylennaphthalinsulfonat, methylenverbückte Polynaphthalinsulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufönat sowie alkylierte und methylenverbrückte Naphthalinsulfonsäuren.

Die Emulgatoren werden in einer Gesamtmenge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbskoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung notwendig werden.

**Polymerisationsinitiatoren:**

Zur Initiierung der Emulsionspolymerisation werden typischerweise **Polymerisationsinitiatoren** eingesetzt, die in Radikale zerfallen. Hierzu gehören Verbindungen, die eine -O-O- Einheit (Peroxo-Verbindungen) oder eine -N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiätorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriuinphosphat oder Tetrakaliumdiphsophat.

Bevorzugte Redoxsysteme sind beispielsweise:

1) Kaliumperoxodisulfat in Kombination mit Triethanolamin,

2) Ammoniumperoxodiphosphat in Kombination mit Natrimmetabisulfit ($Na_2S_2O_5$),

3) p-Menthanhydroperoxid / Natriumformaldehydsulfoxylat in Kombination mit Fe-II-Sulfat ($FeSO_4*7\ H_2O$), Natrium-Ethylendiaminoacetat und Trinatriumphösphat;

4) Cumolhydroperoxid/Natriumformaldehydsulfoxylat in Kombination mit Fe-II-Sulfat ($FeSO_4*7\ H_2O$), Natrium-Ethylendiaminoacetat und Tetrakaliumdiphosphat,

5) Pinanhydroperoxid/Natriumformaldehydsulfoxylat in Kombination mit Fe-II-Sulfat ($FeSO_4*7\ H_2O$), Natrium-Ethylendiaminoacetat und Trinatriumphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsinittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die **Polymerisationszeit** liegt im Bereich von 5 h bis 15 h und hängt im Wesentlichen vom Acrylnitrilgehalt der Monomermischung und von der Polymerisationstemperatur ab.

Die **Polymerisationstemperatur** liegt im Bereich von 0 bis 30°C, bevorzugt von 5 bis 25°C.

Es ist wesentlich für den Erhalt der erfindungsgemäßen Nitrilkautschuke, dass die Polymerisation bis zu einem **Umsatz von mindestens 60% bezogen auf die eingesetzte Monomermischung** durchgeführt wird. Bevorzugt wird die Polymerisation bis zu einem Umsatz im Bereich von 60 bis 98%, besonders bevorzugt 62 bis 95%, insbesondere 65 bis 95% durchgeführt. Bei Erreichen dieses Umsatzes wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10-80 Gew. %, vorzugsweise 30-50 Gew.% der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegen soll. Vorzugsweise ist eine Nachdosierung bei NBR-Typen mit Acrylnitrilgehalten von 10 bis 34 Gew.% sowie bei den Typen mit 40 bis 50 Gew.% Acrylnitril (W. Hofmann, "Nitrilkautschuk", Berliner Union, Stuttgart, 1965, Seite 58-66) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere kann der abgestoppte Latex einer Wasserdampfdestillation unterzogen werden. Hierbei werden Temperaturen im Bereich von 70°C bis 150°C angewandt, wobei bei Temperaturen <100°C der Druck reduziert wird. Vor der Wasserdampfdestillation kann eine Nachstabilisierung des Latex mit Emulgator erfolgen. Hierfür verwendet man zweckmäßigerweise die zuvor genannten Emulgatoren in Mengen von 0,1 bis 2,5 Gew.%, vorzugsweise 0,5 bis 2,0 Gew.% bezogen auf 100 Gew.-Teile Nitrilkautschuk.

**Latex-Koagulation:**

Vor oder bei der Latexkoagulation können dem Latex ein oder mehrere Alterungsschutzmittel zugesetzt werden. Hiefür eigenen sich **phenolische, aminische und auch sonstige Alterungsschutzmittel.**

Geeignete **phenolische Alterungsschutzmittel** sind alkylierte Phenole, styrolisiertes Phenol (CAS-Nr. 61788-44-1), sterisch gehinderte Phenole wie 2,6-Di-tert.-Butylphenol, 2,6-Di-tert-Butyl-p-Kresol (Vulkanox BHT, CAS-Nr.000128-37-0), 2,6-Di-tert.-Butyl-4-Ethylphenol, 2,2'-Methylen-bis(6-tert.butyl)-p-kresol (Vulkanox BKF, CAS-Nr. 000119-47-1), Poly(dicyclopentadien-co-p-kresol), estergruppen-haltige sterisch gehinderte Phenole wie n-Octadecyl-(beta)-(4-hydroxy-3,5-di-tert-butyl-phenyl)-propionat, thioetherhaltige sterisch gehinderte Phenole, 2,2'-Methylen-bis-(4-Methyl-6-tert-Butylphenol) (BPH), 2-Methyl-4,6-bis(octylsulfanylmethyl)phenol sowie sterisch gehinderte Thiobisphenole. In weiteren geeigneten Ausführungsformen werden auch zwei oder mehr Alterungs-schutzmittel zugesetzt, wie z.B. eine Mischung aus n-Octadecyl-β-(4-hydroxy-3,5-di-tert-butyl-phenyl)propionate, Poly(dicyclopentadien-co-p-kresol) und 2-Methyl-4,6-bis(octylsulfanylmethyl)-phenol.

Falls eine Verfärbung des Kautschuks ohne Bedeutung ist, werden auch **aminische Alterungsschutzmittel** z. B. Mischungen aus Diaryl-p-phenylendiaminen (DTPD), octiliertes Diphenylamin (ODPA), Phenyl-α-Naphthylamin (PAN), Phenyl-β-Naphthylamin (PBN), bevorzugt solche auf Phenylendiaminbasis eingesetzt. Beispiele für Phenylendiamine sind *N*-Isopropyl-*N'*-phenyl-*p*-Phenylendiamin, *N*-1,3-Dimethylbutyl-*N'*-Phenyl-*p*-Phenylendiamin (6PPD), *N*-1,4-Dimethylpentyl-*N'*-phenyl-*p*-Phenylendiamin (7PPD), *N,N'*-bis-1,4-(1,4-Dimethylpentyl)-*p*-Phenylendiamin (77PD) etc.

Zu den **sonstigen Alterungsschutzmitteln** gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die vorgenannten sonstigen Alterungsschutzmittel werden oft in Kombination mit phenolischen Altrungsschutzmitteln eingesetzt. Die sonstigen Alterungsschutzmittel TMQ, MBI und MMBI werden v.a. für NBR-Typen verwendet, die peroxidisch vulkanisiert werden.

Für die Koagulation wird der Latex auf einen für den Fachmann bekannten pH-Wert und zwar durch Zusatz einer Base, bevorzugt Ammoniak oder Natrium- oder Kaliumhydroxid, öder einer Säure, bevorzugt Schwefelsäure oder Essigsäure, eingestellt.

In einer Ausführungsform des Verfahrens wird die Koagulation unter Einsatz mindestens eines Salzes ausgewählt aus der.Gruppe bestehend aus Aluminium-, Calcium-, Magnesium-, Natrium-, Kalium- und Lithium-Salzen durchgeführt. Als Anionen dieser Salze werden üblicherweise ein- oder zweiwertige Anionen eingesetzt. Bevorzugt sind Halogenide, besonders bevorzugt Chlorid, Nitrat, Sulfat, Hydrogencarbonat, Carbonat, Formiat und Acetat.

Geeignet sind beispielsweise Natriumchlorid, Kaliumchlorid, Calciumchlorid, Magnesiumchlorid, Natriumnitrat, Kaliumnitrat, Natriumsulfat, Kaliumsulfat, Natriumhydrogencarbonat, Kaliumhydrogencarbonat, Natriumcarbonat, Kaliumcarbonat, Aluminiumsulfät, Kaliumaluminiumsulfat (Kaliumalaun), Natriumaluminiumsulfat (Natriumalaun), Natriumacetat, Calciumacetat und Calciumformiat. Sofern für die Latex Koagulation ein wasserlösliches Calcium-Salz verwendet wird, ist Calciumchlorid bevorzugt.

Die Salze werden in einer Menge von 0,05 bis 10 Gew%, bevorzugt 0,5 bis 8 Gew%, besonders bevorzugt 1 bis 5 Gew%, bezogen auf den Feststoffgehalt der Latexdispersion zugegeben Neben mindestens einem Salz aus der oben definierten Gruppe können bei der Koagulation auch Fällhilfsmittel eingesetzt werden. Als Fällhilfsmittel kommen beispielsweise wasserlöslichen Polymere in Frage. Diese sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäureglyceride, Phenol, alkylierte Phenole, (Alkyl)phenol/Formaldehyd-Kondensate etc. Die Additionsprodukte von Ethylenoxid und Propylenoxid an diese Verbindungen können statistisch und blockartig aufgebaut sein. Von diesen Produkten sind solche bevorzugt, bei denen die Löslichkeit mit zunehmender Temperatur abnimmt. Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblicherweise auf Polyaminen sowie auf Homo- und Copolymeren des (Meth)acrylamids. Bevorzugt sind Polymethacxrylamide und Polyamine, insbesondere auf Basis Epichlorhydrin und Dimethylamin. Die Mengen an polymeren Fällhilfsmitteln betragen 0,01 bis 5 Gew.-Teilen, bevorzugt 0,05 bis 2,5 Gew.-Teile auf 100 Gew.-Teile Nitrilkautschuk.

Auch der Einsatz anderer Fällhilfsmittel ist denkbar. Es ist aber ohne Probleme möglich, das erfindungsgemäße Verfahren in Abwesenheit von zusätzlichen Fällhilfsmitteln durchzuführen.

Der zur Koagulation eingesetzte Latex besitzt zweckmäßigerweise eine Feststoffkonzentration im Bereich von 1 % bis 40 %, vorzugsweise im Bereich von 5 % bis 35 % und besonders bevorzugt im Bereich von 15 bis 30 Gew. %.

Die Latexkoagulation wird im Temperaturbereich von 10 bis 110°C durchgeführt, vorzugsweise von 20 bis 100°C, besonders bevorzugt 50 bis 98°C. Die Latexkoagulation kann kontinuierlich oder diskontinuierlich erfolgen, bevorzugt wird kontinuierlich gearbeitet.

In einer alternativen Ausführungsform kann der üblicherweise von nicht umgesetzten Monomeren abgetrennte Latex auch mit Säuren in einem pH-Bereich von ≤ 6, bevorzugt ≤ 4, besonders bevorzugt 2, behandelt werden, wodurch das Polymer ausfällt. Zur Fällung können alle mineralischen und organischen Säuren verwendet werden, die es gestatten die gewählten pH-Bereiche einzustellen. Mineralische Säuren werden bevorzugt zur pH-Einstellung verwendet. Anschließend wird das Polymer in der dem Fachmann üblichen Weise von der Suspension abgetrennt. Auch dies kann kontinuierlich oder diskontinuierlich erfolgen, bevorzugt wird kontinuierlich gearbeitet.

**Wäsche und Trocknung des koagulierten Nitrilkautschuks:**

Nach der Koagulation liegt der Nitrilkautschuk üblicherweise in Form sogenannter Krümel vor. Die Wäsche des koagulierten NBR wird daher auch als Krümelwäsche bezeichnet. Für diese Wäsche kann entweder entionisiertes Wasser oder nicht entionisiertes Wasser eingesetzt werden. Die Wäsche wird bei einer Temperatur im Bereich von 15 bis 90°C durchgeführt, bevorzugt bei einer Temperatur im Bereich von 20 bis 80°C. Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk. Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist. Nach Abschluss der Wäsche hat es sich bewährt, die Nitrilkautschuk-Krümel zu entwässern. Die Trocknung des vorentwässerten Nitrilkautschuks erfolgt in einem Trockner, geeignet sind beispielsweise Fließbetttrockner oder Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

Nitrilkautschuke, deren Polymerisation nicht unter Einsatz des speziellen Molekulargewichtsreglers und nicht bis zu Umsätzen von mindestens 60% bezogen auf die Summe der eingesetzten Monomeren geführt wurde, zeigen ein deutlich schlechteres Emissionsverhalten und entsprechende textile Bodenbeläge auf Basis von Vulkanisaten, die unter Einsatz solcher nichterfindungsgemäßer Nitrilkautschuke hergestellt werden, zeigen bei den relevanten Anwendungen, wie z.B. in Bodenbelägen, keinerlei Geruchsbelästigungen mehr. Die erfindungsgemäßen Nitrilkautschuke zeichnen sich gleichzeitig durch ein exzellentes Vulkanisationsverhalten aus.

**Gegenstand der Erfindung** ist ferner vulkanisierbare Mischungen enthaltend

**(1)** mindestens einen Nitrilkautschuk mit Wiederholungseinheiten mindestens eines $\alpha,\beta$-ungesättigten Nitrils und mindestens eines konjugierten Diens, der einen **Emissionsquotienten** E gemäß der allgemeinen Formel (I) von kleiner oder gleich 0,25 mg/(kg*Mooney Einheiten) besitzt,

**(2)** 0,05 - 20 phr, bevorzugt 0,1 - 10 phr , besonders bevorzugt 0,2 - 8 phr und insbesondere bevorzugt 0,2 - 5 phr eines oder mehrerer **Vernetzer,** und

**(3)** 1 - 600 phr, bevorzugt 10-500 phr, besonders bevorzugt 20 - 400 phr, und insbesondere 50-300 phr eines oder mehrerer **Füllstoffe,**

wobei phr für "parts per hundred of rubber" steht und sich somit auf 100 Gew.-Teile aller Kautschuke in der vulkanisierbaren Mischung bezieht.

Sofern die vulkanisierbare Mischung als Kautschuk ausschließlich die Nitrilkautschuk Komponente (1) enthält, beziehen sich die phr Angaben für die weiteren Komponenten somit auf 100 Gew.Teile des Nitrilkautschuks.

Die vulkanisierbaren Mischungen können neben den Komponenten 1, 2 und 3

**(4)** optional bis zu 15 phr, bevorzugt 0,05 - 13 phr, besonders bevorzugt 1 - 12 phr und insbesondere 1 - 10 phr eines oder mehrerer **Vernetzungsbeschleuniger,**

**(5)** optional bis zu 10 phr, bevorzugt 0,01 - 10 phr, besonders bevorzugt 0,25 - 10 phr und insbesondere 0,5 bis 7 phr eines oder mehrerer Füllstoffaktivatoren,

**(6)** optional bis zu 5 phr, bevorzugt 0,2 - 5 phr, besonders bevorzugt 0,25 - 4 phr und insbesondere 0,5- 3 phr eines oder mehrerer **Alterungsschutzmittel,**

**(7)** optional bis zu 5 phr, bevorzugt 0,2 - 5 phr, besonders bevorzugt 0,25 - 4 phr und insbesondere 0,5- 3 phr eines oder mehrerer **Ozonschutzmittel,**

**(8)** optional bis zu 10 phr, bevorzugt 0,1 - 10 phr, besonders bevorzugt 0,25 - 7 phr und insbesondere 0,5- 5 phr eines oder mehrerer **Formtrennmittel,**

**(9)** optional bis zu 180 phr, bevorzugt 0,5 -150 phr, besonders bevorzugt 1 - 125 phr und insbesondere 1 - 100 phr eines oder mehrerer **Weichmacher,**

**(10)** optional bis zu 150 phr, bevorzugt 1-100 phr, besonders bevorzugt 1-75 phr und insbesondere 1-50 phr eines oder mehrerer **Verstärkungsmaterialien** und

**(11)** optional **ein oder mehrere weitere Polymere verschieden von der Nitrilkautschuk-Komponente** (1), typischerweise ausgewählt aus der Gruppe bestehend aus Polyvinylchlorid (PVC), Styrol-Butadien Kautschuk, Chloropren-Kautschuk und Butylkautschuk, wobei das Gewichtsverhältnis zwischen der Nitrilkautschuk Komponente (1) und der/dem weiteren Polymeren bevorzugt im Bereich von 1:99 bis 99:1, besonders bevorzugt im Bereich 80:20 bis 20:80 und insbesondere 70:30 bis 30:70, wobei die Summe aus Nitrilkautschuk Komponente (1) und der/dem weiteren Polymeren 100 ergibt, liegt.

Für die gesamte weiteren Ausführungen steht "phr", ohne dass dies jedes Mal erwähnt wird, für "parts per hundred of rubber" und bezieht sich somit auf 100 Gew.-Teile aller Kautschuke in der vulkanisierbaren Mischung. Sofern die vulkanisierbare Mischung als Kautschuk ausschließlich die Nitrilkautschuk Komponente (1) enthält, beziehen sich die phr Angaben für die weiteren Komponenten somit auf 100 Gew.Teile des Nitrilkautschuks.

### Komponente (2): Vernetzer

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N-'m-phenylen-dimaleinimid geeignet.

Die Gesamtmenge des oder der Vernetzer liegt üblicherweise im Bereich von 0,05 bis 20 phr, bevorzugt im Bereich von 0,1 bis 10 phr, besonders bevorzugt im Bereich von 0,2 bis 8 phr und insbesondere bevorzugt im Bereich von 0,2 bis 5 phr.

Als Vernetzer können auch Schwefel in elementarer löslicher oder unlöslicher Form oder Schwefelspender eingesetzt werden.

Wird Schwefel als Vernetzer (2) eingesetzt, so wird er üblicherweise in einer Menge von 0,1 bis 10, bevorzugt 0,2 bis 5 phr und besonders bevorzugt 0,2 bis 3 phr.

Als Schwefelspender kommen beispielsweise Dimorpholyldisulfid (DTDM), 2-Morpholino-dithiobenzothiazol (MBSS), Caprolactamdisulfid, Dipentamethylenthiuramtetrasulfid (DPTT), und Tetramethylthiuramdisulfid (TMTD) in Frage. Wird ein Schwefelspender als Vernetzer (2) eingesetzt, so beträgt die Menge üblicherweise 1 bis 10 phr, bevorzugt 1 bis 6 phr und besonders bevorzugt 1 bis 4 phr.

### Komponente (3): Füllstoff

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum , Kaoline, Bentonite, Carbonanotubes, Teflon (letzteres bevorzugt in Pulverform) oder Silikate eingesetzt werden.

Der Füllstoff wird üblicherweise in einer Menge von 1 bis 600 phr, bevorzugt 10-500 phr, besonders bevorzugt 20 - 400 phr, und insbesondere 50-300 phr **eines oder mehrerer Füllstoffe** eingesetzt.

**Komponente (4): Vernetzungsbeschleuniger**

Es ist möglich, zusätzlich zum Vernetzer (2) noch ein oder mehrere Vernetzungsbeschleuniger zu verwenden, mit deren Hilfe die Vernetzungsausbeute erhöht werden kann. Grundsätzlich kann die Vernetzung aber auch mit einem oder mehreren Vernetzern alleine erfolgen.

Der ein oder mehrere Vernetzungsbeschleuniger wird in einer Menge von bis zu 15 phr, bevorzugt 0,05 - 13 phr, besonders bevorzugt 1 - 12 phr und insbesondere 1 - 10 phr eingesetzt.

Sofern Vernetzungsbeschleuniger in Mischungen mit z.B. Paraffinen o.a. Substanzen eingesetzt werden, bezieht sich die o.g. phr-Angabe auf die jeweilige Wirksubstanz.

Als derartige Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können z.B. Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyl-dithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethylithiocarbamat und Zinkdiisononyldithiocarbamat eingesetzt werden.

Als Thiurame können z.B. Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD) eingesetzt werden.

Als Thiazole können z.B. 2-Mercaptobenzothiazol (MBT), Dibenzthiazyldisulfid (MBTS), Zinkmercaptobenzothiazol (ZMBT) und Kupfer-2-mercaptobenzo-thiazol eingesetzt werden.

Als Sulfenamidderivate können z.B. N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als Xanthogenate können z.B. Natriumdibutylxanthogenat, Zinkisopropyldibutylxanthogenat oder Zinkdibutylxanthogenat eingesetzt werden.

Als Guanidinderivate können z.B. Diphenylguanidin (DPG), Di-o-tolylguanidin (DOTG) oder o-Tolylbiguanid (OTBG) eingesetzt werden.

Als Dithiophosphate können z.B. Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) oder Dithiophoshorylpolysulfid eingesetzt werden.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Vernetzungsbeschleuniger können sowohl einzeln als auch in Mischungen eingesetzt werden. Bevorzugt werden folgende Substanzen für die Vernetzung der Nitrilkautschuke eingesetzt: 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Bei einer Schwefelvernetzung ist es gegebenenfalls auch sinnvoll, zusätzlich zu den Vernetzern und den zuvor genannten Vernetzungsbeschleunigern als Komponente (4) auch weitere anorganische bzw. organische Substanzen mit zu verwenden, beispielsweise: Zinkoxid, Zinkcarbonat, Bleioxid, Magnesiumoxid, gesättigte oder ungesättigte organische Fettsäuren wie Stearinsäure und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

**Komponente (5): Füllstoffaktivatoren**

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar.

Die Menge an Füllstoffaktivatoren beträgt üblicherweise bis zu 10 phr, bevorzugt 0,01 - 10 phr, besonders bevorzugt 0,25 - 10 phr und insbesondere 0,5 bis 7 phr.

### Komponente (6): Alterungsschutzmittel

Als ein oder mehrere **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von bis zu 5 phr, bevorzugt 0,2 - 5 phr, besonders bevorzugt 0,25 - 4 phr und insbesondere 0,5- 3 phr eingesetzt.

### Komponente (7): Ozonschutzmittel

Als Ozonschutzmittel können in den vulkanisierbaren Mischungen paraffinische Wachse, Mikrowachse, Nickeldibutyldithiocarbamat, Phenylendiamine, Vulkazon AFS/LG (CAS Nr. 006600-31-3) oder Vulkazon AFD (CAS-Nr. 022428-48-4) eingesetzt werden. Sie werden üblicherweise in Mengen von bis zu 5 phr, bevorzugt 0,2 - 5 phr, besonders bevorzugt 0,25 - 4 phr und insbesondere 0,5- 3 phr eingesetzt.

### Komponente (8): Formtrennmittel

Als **Formtrennmittel** kommen z.B. gesättigte oder teilweise ungesättigte Fett- und Ölsäuren und deren Derivate in Form von Fettsäureestern, Fettsäuresalzen, Fettalkoholen und Fettsäureamiden, eingesetzt werden oder auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen.

Das oder die Formtrennmittel werden als Mischungsbestandteil in Mengen von bis zu 10 phr, bevorzugt 0,1 bis 10 phr, besonders bevorzugt 0,25 - 7 phr und insbesondere 0,5- 5 phr eingesetzt.

### Komponente (9): Weichmacher

Darüberhinaus können die vulkanisierbaren Mischungen noch ein oder mehrere Weichmaner enthalten. Geeignet sind z.B. die folgenden: Phthalsäureester wie DOP oder DINP, Adipate wie DOA, Mellitate oder Trimellitate wie TOTM, Sebacate wie DOS, Diester-ether-Gemische wie Rhenosin® W759, Thioether wie Vulkanol® OT, Phosphate wie Disflamoll®, Mesamoll® oder polymere Weichmacher wie Ultramoll® und biobasierte Weichmacher wie ESBO.

Der/Die Weichmacher wird üblicherweise in einer Menge von bis zu 180 phr, bevorzugt von 0,5 bis 150 phr, besonders bevorzugt von 1 bis 125 phr und insbesondere 1 bis 100 phr eingesetzt.

### Komponente (10): Verstärkungsmaterialien

Auch die Verstärkung der vulkanisierbaren Mischung mit einem oder mehreren Verstärkungsmaterialien wie z.B. Glasfasern, Corde, Gewebe, Fasern aus aliphatischen und aromatischen Polyamiden (Nylon®, Aramid®), Polyestern oder Naturfaserprodukten.

Das oder die Verstärkungsmaterialien werden optional mit bis zu 150 phr, bevorzugt 1-100 phr, besonders bevorzugt 1-75 phr und insbesondere 1-50 phr eingesetzt.

### Komponente (11): weitere Polymere

Die vulkanisierbare Mischung kann ein oder mehrere weitere Polymere enthalten, die sich von dem eingesetzten Nitrilkautschuk mit speziellem Emissionskoeffizienten E unterscheiden. Einsetzbar sind beispielsweise ein oder mehrere Kautschuke bevorzugt ausgewählt aus der Gruppe bestehend aus natürlichem Gummi, Polyvinylchlorid (PVC), Styrol-Butadien Kautschuk (SBR), Polybutadien Kautschuk (PBR), Chloropren-Kautschuk (CR), Butylkautschuk (BR), Ethylen Propylen Dien Monomer Kautschuk (EPDM) und Mischungen daraus oder aber thermoplastische Kunststoffe, bevorzugt ausgewählt aus der Gruppe bestehend aus Polyvinylchlorid, Polyethylen, Ethylenvinylacetat, Polypropylen, und Polystyrol.

Das Gewichtsverhältnis zwischen der Nitrilkautschuk Komponente (1) und der/dem weiteren Polymeren bevorzugt im Bereich von 1:99 bis 99:1, besonders bevorzugt im Bereich 80:20 bis 20:80 und insbesondere 70:30 bis 30:70, wobei die Summe aus Nitrilkautschuk Komponente (1) und der/dem weiteren Polymeren 100 ergibt, liegt.

Derartige Zusätze weiterer Polymere erfolgen bewährterweise in den folgenden Mengenverhältnissen:

NBR / PVC in Gewichtsverhältnissen von 1:99 bis 99:1, bevorzugt 70:30 bis 50:50
NBR / SBR in Gewichtsverhältnissen von 1:99 bis 99:1, bevorzugt 70:30 bis 50:50
NBR / CR in Gewichtsverhältnissen von 1:99 bis 99:1, bevorzugt 80:20 bis 20:80
NBR / BR in Gewichtsverhältnissen von 1:99 bis 99:1, bevorzugt 80:20 bis 20:80

Es ist nicht ausgeschlossen, dass die vulkanisierbare Mischung weitere übliche Kautschukadditive enthält, beispielsweise Verarbeitungshilfsmittel, Extenderöle, Antioxidationsmittel, Pigmente o.a.

In einer Ausführungsformen kann beispielsweise eine Rezeptur für die vulkanisierbare Mischung verwendet werden, bei der neben dem einzusetzenden Nitrilkautschuk (1)

| | | | | |
|---|---|---|---|---|
| (2) | Schwefel | | 3 | phr |
| (3) | Vernetzungsbeschleuniger: | | | |
| | TMTD | | 0,5 | phr |
| | CBS | | 1,5 | phr |
| | Stearinsäure | | 1,5 | phr |
| | ZnO | | 5 | phr |
| (4) | 1.Füllstoff z.B. Kreide | | 100 | phr |
| | 2.Füllstoff z.B. Kaolin | | 100 | phr |
| | 3.Füllstoff z.B. Ruß N772 | | 15 | phr |
| (6) | Ozonschutzmittel z.B. Paraffin Wachs | | 3 | phr |
| (9) | Weichmacher z.B. DINP | | 50 | phr |

**Herstellung der vulkanisierbaren Mischungen:**

Das Mischen der Komponenten zwecks Herstellung der vulkanisierbaren Mischungen erfolgt typischerweise entweder im Innenmischer oder auf einer Walze. Als Innenmischer werden üblicherweise solche mit sogenannter "ineinandergreifender" Rotorgeometrie verwendet. Zum Startzeitpunkt erfolgt die Beschickung des Innenmischers mit dem Nitrilkautschuk. Dieser liegt üblicherweise in Ballenform vor und wird dabei zunächst zerkleinert. Nach einem geeigneten Zeitraum, den der Fachmann problemlos festlegen kann, erfolgt die Zugabe des Vernetzers (2), und des/der Füllstoffe (3). Das Mischen erfolgt unter Kontrolle der Temperatur mit der Maßgabe, dass das Mischgut für eine geeignete Zeit bei einer Temperatur im Bereich von 100 bis 200°C verbleibt. Nach einem weiteren geeigneten Mischzeitraum erfolgt typischerweise die Zugabe der weiteren Komponenten (4) bis (11), soweit diese eingesetzt werden. Nach einem weiteren geeigneten Mischzeitraum wird der Innenmischer gelüftet und der Schacht gereinigt. Nach einem weiteren Zeitraum wird der Innenmischer unter Erhalt der vülkanisierbaren Mischung entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden. Alternativ sinnvolle Zugabereihenfolgen sind möglich und erschließen sich dem Fachmann durch einige wenige Mischversuche.

**Textiler Bodenbelag:**

Der erfindungsgemäße textile Bodenbelag umfasst

(a) eine rückseitige Trägerschicht enthaltend ein Vulkanisat basierend auf mindestens einem Nitrilkautschuk (1) und
(b) eine vorderseitige Textilschicht,

dadurch gekennzeichnet, dass der Nitrilkautschuk (1) Wiederholungseinheiten mindestens eines $\alpha,\beta$-ungesättigten Nitril-Monomeren und mindestens eines konjugierten Dien-Monomeren aufweist und einen **Emissionsquotienten E** gemäß der Formel (I) von kleiner oder gleich 0,25 mg/(kg*Mooney Einheiten) besitzt.

Der Oberbegriff "Bodenbelag" bezeichnet dabei im Sinne dieser Erfindung und Anmeldung Bodenbeläge unabhängig von ihrer räumlichen Form, d.h. es kann sich um Bahnen, Platten oder Matten handeln, die zum ganzen oder teilweisen Bedecken von Böden oder jedweden Oberflächen verwendet werden.

Hat der textile Bodenbelag die Form einer Matte so bietet diese den Vorteil, dass sie auf verschiedenen Böden benutzt werden kann, die entweder Teppichbereiche, harte Oberflächenbereiche oder auch beide Arten von Bereichen, wie beispielsweise in Kraftfahrzeugen oder in Haushalten, aufweisen.

Die vorderseitige Textilschicht des erfindungsgemäßen textilen Bodenbelags kann büschelig oder gewebt sein und verstärkt oder unverstärkt. Vorzugsweise besteht die Textilschicht aus einer büscheligen Bauweise. In diesem Fall spricht man von einer sogenannten Flor- oder Polschicht, d.h. viele Polfäden erstrecken sich durch ein textiles Grundmaterial unter Ausbildung von Schleifen, die zum Bilden von Büscheln zerschnitten werden können. Der Pol kann aufgeschnitten sein oder alternativ dazu eine Schlingenware sein. Auch ein Nadelfilz - also aus allen Textilen, die auch für die Teppiche und Matten in der Industrie üblicherweise verwendet werden - kann die Textilschicht darstellen.

Die Polschicht umfasst die Gesamtmenge des Fasermaterials. Bei den Fasern der Polfäden kann es sich um natürliche oder synthetische Fasern handeln. Sie können thermoplastisch oder aushärtbar bzw. thermofixierbar sein. Bevorzugt handelt es sich bei den Polfäden um Naturfasern, besonders bevorzugt um Baumwolle, und/oder thermoplastische Polymerfasern, vorzugsweise ausgewählt aus der Gruppe der Polyamide, Polyester, PET oder Mischungen daraus, umfassen.

In einer alternativen Ausführungsform ist es möglich, dass sich zwischen der rückseitige Trägerschicht (a) und der vorderseitigen Textilschicht (b) ein oder mehrere Zwischenschichten (c) befinden. Bei diesen Zwischenschichten kann es sich beispielsweise

- um Gewebeschichten oder Vliesstoffe (Non-wovens) (c1) handeln,

- um Schichten aus Vulkanisaten weiterer Kautschuke (c2) bevorzugt ausgewählt aus Vulkanisaten von Polyvinylchlorid (PVC), Styrol-Butadien Kautschuk (SBR), Chloropren-Kautschuk (CR), Butylkautschuk (BR) und Mischungen daraus oder

- um ein oder mehrere Haft- oder Klebstoffschichten (c3) handeln, bevorzugt enthaltend einen thermisch aktivierbaren Klebstoff beispielsweise einen thermoplastischen Klebstoff.

Das Design und optische Aussehen des textilen Bodenbelags können breit variiert werden. Die Oberfläche der Textilschicht schafft die Möglichkeit der dekorativen und ästhetischen Gestaltung. Optional enthält der textile Bodenbelag Stickereien oder andere Näheinrichtungen, Farbvariationen der Textilschicht oder eingedruckte Designs oder Logos.

Soweit gewünscht können optional Ziergegenstände in oder auf der vorderseitigen Textilschicht b) aufgebracht sein oder aber in eine Zwischenschicht c) eingearbeitet sein oder aber bei Fehlen einer Zwischenschicht c) in die rückseitige Trägerschicht a). Als Ziergegenstand sind beispielsweise Schmucksteine, Edelsteine, Glassteine, Perlen oder andere dekorative Elemente möglich. Der Ziergegenstand kann außerdem in eine Fassung eingebracht sein und über die Fassung mittels der Klebstoffschicht mit dem textilen Bodenbelag verklebt werden. Außerdem können mehrere Ziergegenstände als Verbund eingesetzt werden, z.B. über Fassungen, die kettenartig miteinander verbunden sind.

Die Fassungen oder der Ziergegenstand selber können auf ihrer Rückseite mit einem Klebstoff versehen sein, der durch Hitzeeinwirkung aktiviert wird. Die Auf- bzw. Einbringung der Ziergegenstände kann wie folgt vorgenommen werden: Zum einen kann in dem Bereich des textilen Bodenbelags, wo der Ziergegenstand aufgebracht werden soll, (i) entweder die Textilschicht b) gänzlich fehlen oder aber (ii) von dieser nur die Polfäden aus dem textilen Grundmaterial entfernt werden. Zum Zweck (i) kann die Textilschicht b) im Bereich, wo der Ziergegenstand aufgebracht werden soll, gänzlich ausgespart werden oder aber auch nachträglich komplett entfernt werden. Zum Zwecks (ii) werden nur die Polfäden ausgezupft. Besitzt der Ziergegenstand selber oder aber dessen Fassung keine Klebstoffbeschichtung auf der Rückseite, ist es empfehlenswert, auf die rückseitige Trägerschicht 1) noch eine Klebstoffschicht c3) aufzubringen, mit der die Ziergegenstände dann durch Hitzeeinwirkung verbunden werden.

In einer weiteren Ausführungsform ist es auch möglich, dass sich unterhalb der rückseitigen Trägerschicht 1) noch eine weitere Schicht befindet, bei der es sich je nach geplantem Anwendungsfall, insbesondere bei einer Ausgestaltung als räumlich begrenzter Matte um eine Antirutschlage handeln kann.

**Gegenstand der Erfindung** ist ferner ein **Verfahren zur Herstellung der erfindungsgemäßen textilen Bodenbeläge** mit niedrigen Emissionen, indem man die vorderseitige textile Trägerschicht 2) und die rückseitige Trägerschicht 1) sowie optional ein oder mehrere weitere Zwischenschichten c) unter zusammenpressendem Formdruck (z. B. ein gewählter Druck in dem Bereich von 2.5 bar bis 20 bar) in Kontakt bringt und verklebt. Vorzugsweise, wenn ein büscheliger Florteppichstoff die vorderseitige Textilschicht bildet, wird der Flor zerdrückt, während die anderen Schichten unter zusammenpressendem Formdruck sind. Ein Abschnitt der Bodenfläche der vorderseitigen Textilschicht wird in die Grundschicht während dem Erhitzen und dem Aushärten, der Vulkanisation, der Grundschicht bei einer Temperatur von 100°C bis 200°C eingebettet, während der Teppich und die Grundschicht unter zusammenpressendem Formdruck sind. Die mehrschichtige textile Matte wird auf eine Temperatur von weniger als 40°C abgekühlt, um die Fasern der Teppichgarne unter einer Temperatur zu halten, an der die Flore im wesentlichen dauerhaft unter dem anliegenden Formdruck geformt werden, und um so die Elastizität zu erhalten. Ein geeignetes Formungsgerät ist detaillierter in dem US-PatentNr. 4,174,991 beschrieben, obwohl andere Formungstechniken, insbesondere falls thermoplastische Materialien verwendet werden, einem Fachmann hinlänglich bekannt sind.

Für die Herstellung des textilen Bodenbelags kann so vorgegangen werden, dass der spezielle zu vulkanisierende Nitrilkautschuk, bevorzugt die vulkanisierbare Mischung enthaltend den speziellen Nitrilkautschuk, einen oder mehrere Vernetzer und ein oder mehrere Füllstoffe in ein Werkzeug ein- oder aufgebracht wird, dort in die gewünschte räumliche Form als Bahn oder Platte gebracht wird und anschließend optional die ein oder mehreren weiteren Zwischenschichten aufgebracht werden und abschließend die Textilschicht aufgebracht wird und abschließend alle Schichten unter einem Druck zusammengepresst werden. Hierbei erfolgt dann zum einen die Vulkanisation der rückseitigen Trägerschicht, evt. ein Aushärten von Zwischenschichten und die Herstellung der Verklebung aller Schichten miteinander.

**Gegenstand der vorliegenden Erfindung** ist ferner die Verwendung der textilen Bodenbeläge gemäß den vorstehenden Definitionen werden zur vollständigen oder teilweisen Abdeckung von Flächen, vorzugsweise Fussböden, in Innenräumen, vorzugsweise in Passagierabteilungen von Kraftfahrzeugen, Flugzeugen, Wohnungen, Geschäften oder deren Eingängen.

**Patentansprüche**

1.   **Textiler Bodenbelag** enthaltend

(a) eine rückseitige Trägerschicht enthaltend ein Vulkanisat basierend auf mindestens einem Nitrilkautschuk (1) und

(b) eine vorderseitige Textilschicht,

**dadurch gekennzeichnet, dass** der Nitrilkautschuk (1) Wiederholungseinheiten mindestens eines $\alpha,\beta$-ungesättigten Nitril-Monomeren und mindestens eines konjugierten Dien-Monomeren aufweist und einen **Emissionsquotienten E** gemäß der Formel (I) von kleiner oder gleich 0,25 mg/(kg*Mooney Einheiten) besitzt,

$$E = \frac{[\text{flüchtige Bestandteile}]}{[\text{Mooney Viskosität}]} \times \frac{[\text{Nitrilgehalt}]}{100} \qquad (I)$$

worin

[flüchtige Bestandteile] die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden,
[Mooney-Viskösität] die nach ASTM D 1646 bestimmte Mooney-Viskosität ML 1+4 bei 100°C des Nitrilkautschuks angegeben in Mooney-Einheiten darstellt, und
[Nitrilgehalt] den dimensionslos angegebenen Gehalt des $\alpha,\beta$-ungesättigten Nitrils im Nitrilkaütschuk darstellt, der in Gew.% gemäß DIN 53 625 nach Kjeldahl bestimmt wird.

2.   **Textiler Bodenbelag** gemäß Anspruch 1, **dadurch gekennzeichnet, dass** das in der rückseitigen Trägerschicht enthaltende Vulkanisat auf einem Nitrilkautschuk mit einem Emissionsquotienten E gemäß der allgemeinen Formel (I) von kleiner oder gleich 0,22 mg/(kg*Mooney Einheiten) und bevorzugt kleiner oder gleich 0,20 mg/(kg*Mooney Einheiten) basiert.

3.   **Textiler Bodenbelag** gemäß Anspruch 1 oder 2, **dadurch gekennzeichnet, dass** das in der rückseitigen Trägerschicht enthaltende Vulkanisat auf einem Nitrilkautschuk basiert enthaltend Wiederholungseinheiten von Butadien und Acrylnitril, bevorzugt enthaltend Wiederholungseinheiten von ausschließlich Butadien und Acrylnitril.

4.   **Textiler Bodenbelag** gemäß einem oder mehreren der Ansprüche 1 bis 3, **dadurch gekennzeichnet, dass** das in der rückseitigen Trägerschicht enthaltene Vulkanisat auf einem Nitrilkautschuk basiert enthaltend 20 bis 95 Gew.%, bevorzugt 45 bis 90 Gew.%, besonders bevorzugt 50-85 Gew.%, Wiederholungseinheiten mindestens eines konjugierten Diens und 5-80 Gew.%, bevorzugt 10-55 Gew.%, besonders bevorzugt 15- 50 Gew.% Wiederholungseinheiten mindestens eines $\alpha,\beta$-ungesättigten Nitrils, wobei sich die Anteile der Wiederholungseinheiten an konjugiertem Dien und $\alpha,\beta$-ungesättigtem Nitril jeweils zu 100 Gew.% aufsummieren.

5.   **Textiler Bodenbelag** gemäß einem oder mehreren der Ansprüche 1 bis 4, **dadurch gekennzeichnet, dass** der

Nitrilkautschuk C$_9$-Alkylthio-Endgruppen enthält.

6. **Textiler Bodenbelag** gemäß einem oder mehreren der Ansprüche 1 bis 5, **dadurch gekennzeichnet, dass** das Vulkanisat in der rückseitigen Trägerschicht a) durch Vernetzung einer vulkanisierbaren Mischung erhältlich ist, die

(1) mindestens einen Nitrilkautschuk mit Wiederholungseinheiten mindestens eines α,β-ungesättigten Nitrils und mindestens eines konjugierten Diens, der einen **Emissionsquotienten** E gemäß der allgemeinen Formel (I) von kleiner oder gleich 0,25 mg/(kg*Mooney Einheiten) besitzt,

(2) 0,05 - 20 phr, bevorzugt 0,1 - 10 phr , besonders bevorzugt 0,2 - 8 phr und insbesondere bevorzugt 0,2 - 5 phr eines oder mehrerer **Vernetzer,** und

(3) 1 - 600 phr, bevorzugt 10-500 phr, besonders bevorzugt 20 - 400 phr, und insbesondere 50-300 phr eines oder mehrerer **Füllstoffe** enthält,

wobei sich die phr auf 100 Gew.Teile aller Kautschuke in der vulkanisierbaren Mischung bezieht.

7. Textiler **Bodenbelag** gemäß Anspruch 6, **dadurch gekennzeichnet, dass** die vulkanisierbare Mischungen zusätzlich zu den Komponenten (1), (2) und (3) mindestens eine weitere Komponente enthält, ausgewählt aus den Komponenten (4) bis (11)

(4) optional bis zu 15 phr, bevorzugt 0,05 - 13 phr, besonders bevorzugt 1 - 12 phr und insbesondere 1 - 10 phr eines oder mehrerer **Vernetzungsbeschleuniger,**

(5) optional bis zu 10 phr, bevorzugt 0,01 - 10 phr, besonders bevorzugt 0,25 - 10 phr und insbesondere 0,5 bis 7 phr eines oder mehrerer **Füllstoffaktivatoren,**

(6) optional bis zu 5 phr, bevorzugt 0,2 - 5 phr, besonders bevorzugt 0,25 - 4 phr und insbesondere 0,5- 3 phr eines oder mehrerer **Alterungsschutzmittel,**

(7) optional bis zu 5 phr, bevorzugt 0,2 - 5 phr, besonders bevorzugt 0,25 - 4 phr und insbesondere 0,5- 3 phr eines oder mehrerer **Ozonschutzmittel,**

(8) optional bis zu 10 phr, bevorzugt 0,1 - 10 phr, besonders bevorzugt 0,25 - 7 phr und insbesondere 0,5- 5 phr eines oder mehrerer **Formtrennmittel,**

(9) optional bis zu 180 phr, bevorzugt 0,5 -150 phr, besonders bevorzugt 1 - 125 phr und insbesondere 1 - 100 phr eines oder mehrerer **Weichmacher,**

(10) optional bis zu 150 phr, bevorzugt 1-100 phr, besonders bevorzugt 1-75 phr und insbesondere 1-50 phr eines oder mehrerer **Verstärkungsmaterialien** und

(11) optional **ein oder mehrere weitere Polymere verschieden von der Nitrilkautschuk-Komponente (1),** typischerweise ausgewählt aus der Gruppe bestehend aus Polyvinylchlorid (PVC), Styrol-Butadien Kautschuk, Chloropren-Kautschuk und Butylkautschuk, wobei das Gewichtsverhältnis zwischen der Nitrilkautschuk Komponente (1) und der/dem weiteren Polymeren bevorzugt im Bereich von 1:99 bis 99:1, besonders bevorzugt im Bereich 80:20 bis 20:80 und insbesondere 70:30 bis 30:70, wobei die Summe aus Nitrilkautschuk Komponente (1) und der/dem weiteren Polymeren 100 ergibt, liegt,

wobei sich die phr auf 100 Gew.Teile aller Kautschuke in der vulkanisierbaren Mischung bezieht.

8. **Textiler Bodenbelag** nach Anspruch 7, **dadurch gekennzeichnet, dass** als **Vernetzer** ein oder mehrere ausgewählt aus der Gruppe bestehend aus peroxidischen Vernetzern, bevorzugt Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3, Schwefel in elementarer löslicher oder unlöslicher Form und Schwefelspendern eingesetzt werden.

9. Textiler Bodenbelag nach Anspruch 7 oder 8, **dadurch gekennzeichnet, dass** als Füllstoff ein oder mehrere ausgewählt aus der Gruppe bestehend aus Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikaten, Diatomeenerde, Talkum, Kaolinen, Bentoniten, Carbonanotubes, Teflon und Silikaten eingesetzt werden.

10. **Textiler Bodenbelag** nach einem oder mehreren der Ansprüche 7 bis 9, **dadurch gekennzeichnet, dass** als **Vernetzungsbeschleuniger** ein oder mehrere ausgewählt aus der Gruppe bestehend aus Dithiocarbamaten, Thiuramen, Thiazolen, Sulfenamiden, Xantho-genaten, Guanidinderivaten, Caprolactamen und Thioharnstoffderivaten eingesetzt werden.

**11. Textiler Bodenbelag** nach einem oder mehreren der Ansprüche 7 bis 10, **dadurch gekennzeichnet, dass** als **Füllstoffaktivatoren** ein oder mehrere organische Silane eingesetzt werden, bevorzugt Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan.

**12. Textiler Bodenbelag** nach einem oder mehreren der Ansprüche 7 bis 11, **dadurch gekennzeichnet, dass** als Alterungsschutzmittel

(i) ein oder mehrere **phenolische Alterungsschutzmittel,** bevorzugt alkylierte Phenole, styrolisiertes Phenol, sterisch gehinderte Phenole wie 2,6-Di-tert.-Butylphenol, 2,6-Di-tert-Butyl-p-Kresol, 2,6-Di-tert.-Butyl-4-Ethylphenol, 2,2'-Methylen-bis(6-tert.butyl)-p-kresol, Poly(dicyclopentadien-co-p-kresol), estergruppenhaltige sterisch gehinderte Phenole insbesondere n-Octadecyl-β-(4-hydroxy-3,5-di-tert-butyl-phenyl)-propionat, thioetherhaltige sterisch gehinderte Phenole, 2,2'-Methylen-bis-(4-Methyl-6-tert-Butylphenol), 2-Methyl-4,6-bis(octylsulfanylmethyl)phenol sowie sterisch gehinderte Thio-bisphenole, besonders bevorzugt 2,2'-Methylen-bis(6-tert.butyl)-p-kresol, und/oder

(ii) ein oder mehrere **aminische Alterungsschutzmittel,** bevorzugt Mischungen aus Diaryl-p-phenylendiaminen, octyliertes Diphenylamin, Phenyl-α-Naphthylamin, Phenyl-β-Naphthylamin, bevorzugt solche auf Phenylendiaminbasis, insbesondere *N*-Isopropyl-*N'*-phenyl-*p*-Phenylendiamin, *N*-1,3-Dimethylbutyl-*N'*-Phenyl-*p*-Phenylendiamin, *N*-1,4-Dimethylpentyl-*N'*-phenyl-*p*-Phenylendiamin, *N,N'*-bis-1,4-(1,4-Dimethylpentyl)-*p*-Phenylendiamin und/oder

(iii) ein oder mehrere **sonstige,** von (i) und (ii) verschiedene **Alterungsschutzmittel,** bevorzugt Phosphite, insbesondere Tris-(nonylphenyl)phosphit, polymerisiertes 2,2,4-Trimethyl-1,2-dihydrochinolin, 2-Mercaptobenzimidazol, Methyl-2-Mercaptobenzimidazol oder Zinkmethylmercaptobenzimidazol eingesetzt werden.

**13. Textiler Bodenbelag** nach einem oder mehreren der Ansprüche 7 bis 12, **dadurch gekennzeichnet, dass** als **Ozonschutzmittel** paraffinische Wachse, Mikrowachse, Nickeldibutyldithiocarbamat, Phenylendiamine, Vulkazon AFS/LG (CAS Nr. 006600-31-3) oder Vulkazon AFD (CAS-Nr. 022428-48-4) eingesetzt werden

**14. Textiler Bodenbelag** nach einem oder mehreren der Ansprüche 7 bis 13, **dadurch gekennzeichnet, dass** als **Formtrennmittel** gesättigte oder teilweise ungesättigte Fett- und Ölsäuren und deren Derivate in Form von Fettsäureestern, Fettsäuresalzen, Fettalkoholen und Fettsäureamiden, eingesetzt werden oder auf die Formoberfläche applizierbare Produkte, bevorzugt Produkte auf Basis von niedermolekularen Silikonverbindungen, Produkten auf Basis von Fluorpolymeren sowie Produkten auf Basis von Phenolharzen.

**15. Textiler Bodenbelag** nach einem oder mehreren Ansprüche 7 bis 14, **dadurch gekennzeichnet, dass** als Weichmacher ein oder mehrere ausgewählt aus der Gruppe bestehend aus Phthalsäureestern, bevorzugt DOP oder DINP, Adipaten, bevorzugt DOA, Mellitaten, Trimellitaten, bevorzugt TOTM, Sebacaten, bevorzugt DOS, Diesterether-Gemische, Thioether, Phosphate, polymere Weichmacher und biobasierten Weichmacher, bevorzugt ESBO eingesetzt werden.

**16. Textiler Bodenbelag** nach einem oder mehreren der Ansprüche 7 bis 15, **dadurch gekennzeichnet, dass** ein oder mehrere weitere Polymere enthalten sind, die sich von dem Nitrilkautschuk (1) unterscheiden und bevorzugt ausgewählt sind aus der Gruppe bestehend aus Kautschuken, bevorzugt natürlichem Gummi, Polyvinylchlorid (PVC), Styrol-Butadien Kautschuk (SBR), Polybutadien Kautschuk (PBR), Chloropren-Kautschuk (CR), Butylkautschuk (BR) und Ethylen Propylen Dien Monomer Kautschuk (EPDM), und thermoplastischen Kunststoffen, bevorzugt Polyvinylchlorid, Polyethylen, Ethylenvinylacetat, Polypropylen und Polystyrol.

**17. Textiler Bodenbelag** nach einem oder mehreren der Ansprüche 1 bis 16, **dadurch gekennzeichnet, dass** es sich bei dem Belag um Bahnen, Platten oder Matten handelt, die zum ganzen oder teilweisen Bedecken von Böden oder Oberflächen verwendet werden.

**18. Textiler Bodenbelag** nach einem oder mehreren der Ansprüche 1 bis17, **dadurch gekennzeichnet, dass** die vorderseitige Textilschicht büschelig oder gewebt, verstärkt oder unverstärkt ist, und vorzugsweise eine Flor- oder Polschicht darstellt, bei der sich viele Polfäden durch ein textiles Grundmaterial unter Ausbildung von Schleifen erstrecken, die aufgeschnitten sind oder alternativ als Schlingenware vorliegen, wobei die Fasern der Polfäden bevorzugt Naturfasern, besonders bevorzugt Baumwolle, und/oder synthetische Fasern, bevorzugt thermoplastische Polymerfasern, insbesondere ausgewählt aus der Gruppe der Polyamide, Polyester, PET oder Mischungen daraus, umfassen.

19. **Textiler Bodenbelag** nach einem oder mehreren der Ansprüche 1 bis 18, **dadurch gekennzeichnet, dass** sich zwischen der rückseitige Trägerschicht (a) und der vorderseitigen Textilschicht (b) ein oder mehrere Zwischenschichten (c) befinden.

20. **Verfahren zur Herstellung der textilen Bodenbeläge** gemäß einem oder mehreren der Ansprüche 1 bis 19, indem man die vorderseitige Textilschicht b) und die rückseitige Trägerschicht a) sowie optional ein oder mehrere weitere Zwischenschichten c) unter zusammenpressendem Formdruck miteinander in Kontakt bringt und verklebt.

21. **Verwendung der textilen Bodenbeläge** gemäß einem oder mehreren der Ansprüche 1 bis 19 zur vollständigen oder teilweisen Abdeckung von Flächen, vorzugsweise Fussböden, in Innenräumen, vorzugsweise in Passagierabteilungen von Kraftfahrzeugen, Flugzeugen, Wohnungen, Geschäften oder deren Eingängen.

**Europäisches Patentamt**
**European Patent Office**
**Office européen des brevets**

# EUROPÄISCHER RECHERCHENBERICHT

Nummer der Anmeldung

EP 15 29 0100

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 159 576 A (ROCKWELL JR JAMES N [US]) 12. Dezember 2000 (2000-12-12) | 1-4,6-21 | INV. D06N7/00 |
| Y | * Example; Spalten 6-8; Ansprüche 1-4,8-10,14; Tabellen 1A, 1B * | 5 | B60N3/04 |
| | ----- | | |
| X | JP H01 139033 A (DUSKIN CO LTD) 31. Mai 1989 (1989-05-31) | 1-4,6-21 | |
| Y | * Zusammenfassung * | 5 | |
| | ----- | | |
| X | US 5 198 278 A (SUMIMOTO KAZUSHI [US] ET AL) 30. März 1993 (1993-03-30) | 1-4,6-21 | |
| Y | * Spalte 3, Zeile 10 - Spalte 5, Zeile 5; Ansprüche 1,9; Beispiele 1,2 * | 5 | |
| | ----- | | |
| Y | EP 2 368 916 A1 (LANXESS INT SA [CH]; LANXESS DEUTSCHLAND GMBH [DE]) 28. September 2011 (2011-09-28) * Zusammenfassung; Ansprüche 1,25 * * das ganze Dokument * | 5 | |
| | ----- | | |

RECHERCHIERTE SACHGEBIETE (IPC)

D06N
B60N
C08F
C08L

Der vorliegende Recherchenbericht wurde für alle Patentansprüche erstellt

| Recherchenort | Abschlußdatum der Recherche | Prüfer |
|---|---|---|
| Den Haag | 30. September 2015 | Malik, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 29 0100

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2015

| Im Recherchenbericht angeführtes Patentdokument | | Datum der Veröffentlichung | Mitglied(er) der Patentfamilie | | Datum der Veröffentlichung |
|---|---|---|---|---|---|
| US 6159576 | A | 12-12-2000 | EP | 0971064 A2 | 12-01-2000 |
| | | | US | 6159576 A | 12-12-2000 |
| JP H01139033 | A | 31-05-1989 | KEINE | | |
| US 5198278 | A | 30-03-1993 | DK | 0466308 T3 | 15-08-1994 |
| | | | EP | 0466308 A1 | 15-01-1992 |
| | | | JP | 2656372 B2 | 24-09-1997 |
| | | | JP | H0471522 A | 06-03-1992 |
| | | | US | 5198278 A | 30-03-1993 |
| EP 2368916 | A1 | 28-09-2011 | CA | 2792840 A1 | 29-09-2011 |
| | | | CN | 102822205 A | 12-12-2012 |
| | | | EP | 2368916 A1 | 28-09-2011 |
| | | | EP | 2550301 A1 | 30-01-2013 |
| | | | JP | 2013523901 A | 17-06-2013 |
| | | | KR | 20130027488 A | 15-03-2013 |
| | | | TW | 201211064 A | 16-03-2012 |
| | | | US | 2013211031 A1 | 15-08-2013 |
| | | | WO | 2011117194 A1 | 29-09-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69231347 T2
- EP 2537977 A1
- US 2434536 A
- EP 0692496 A
- EP 0779301 A
- EP 0779300 A
- DD 154702

**In der Beschreibung aufgeführte Nicht-Patentliteratur**

- Ullmann's Encyclopedia of Industrial Chemistry. VCH Verlagsgesellschaft, 1993, 255-261
- Ullmanns Enzyklopädie der technischen Chemie. vol. 13, 611-612
- Ullmann's Encyclopedia of Industrial Chemistry. vol. 31, 345-355
- Ullmann's Encyclopedia of Industrial Chemistry. vol. 13, 75-108
- **W. HOFMANN.** Nitrilkautschuk. Berliner Union, 1965, 58-66